# EUROPEAN PATENT APPLICATION

(11) **EP 4 715 692 A1**
(43) Date of publication of application: **25.03.2026**
(21) Application number: 24822536.9
(22) Date of filing: 28.05.2024
(51) Int. Cl.: G06Q 10/02

(54) **METHOD FOR RESERVING VEHICLE SERVICE, AND DEVICE**

(30) Priority: 16.06.2023 CN 202310724161
(71) Applicant: Shenzhen Yinwang Intelligent Technologies Co., Ltd., Shenzhen, Guangdong 518110 (CN)
(72) Inventor: ZHAO, Gaosong, Shenzhen, Guangdong 518129 (CN); XU, Xinlin, Shenzhen, Guangdong 518129 (CN); ZHU, Hualin, Shenzhen, Guangdong 518129 (CN)
(74) Representative: MERH-IP Matias Erny Reichl Hoffmann Patentanwälte PartG mbB
(86) International application number: PCT/CN2024/095841
(87) International publication number: WO 2024/255584

(57) **Abstract**

This application provides a vehicle service reservation method and a device. The method includes: obtaining travel information of a vehicle, where the travel information includes path information, travel plan information, and energy consumption information; determining M service apparatuses based on the travel information, where M is a positive integer; and making a service reservation of N service apparatuses in the M service apparatuses, where N is a positive integer less than or equal to M, and a service apparatus that is successfully reserved in the N service apparatuses is configured to provide a vehicle service for the vehicle. In this way, a user is prevented from manually selecting a service apparatus for a reservation, and vehicle use convenience and vehicle use safety of the user are improved.

## Description

This application claims priority to Chinese Patent Application No. 202310724161.4, filed with the China National Intellectual Property Administration on June 16, 2023 and entitled "VEHICLE SERVICE RESERVATION METHOD AND DEVICE", which is incorporated herein by reference in its entirety.

### TECHNICAL FIELD

This application relates to the field of vehicle technologies, and in particular, to a vehicle service reservation method and a device.

### BACKGROUND

In a traveling process of a vehicle, vehicle services such as energy supplement (for example, charging and refueling), parking, and reverse energy supplement are inevitably required. An increasing quantity of vehicles leads to high supply pressure of the vehicle service. For example, a new energy electric vehicle has problems of difficult charging and long queuing due to a limited quantity of charging piles. To relieve the supply pressure of the vehicle service and implement efficient utilization of vehicle service resources, a user may reserve the vehicle service in advance by using a client of the vehicle service. However, the user needs to manually select, by using the client, an appropriate vehicle service resource for a reservation. This affects vehicle use convenience and driving safety of the user.

### SUMMARY

Embodiments of this application provide a vehicle service reservation method and a device, to implement an automatic reservation of a vehicle service, so as to improve vehicle use convenience and driving safety.

According to a first aspect, an embodiment of this application provides a vehicle service reservation method. The method may be performed by a first apparatus, and the first apparatus may be deployed on a service end, or deployed on a cloud and a service end in a distributed manner.

The method includes: obtaining travel information of a vehicle, where the travel information includes path information, travel plan information, and energy consumption information; determining M service apparatuses based on the travel information, where M is a positive integer; and making a service reservation of N service apparatuses in the M service apparatuses, where N is a positive integer less than or equal to M, and a service apparatus that is successfully reserved in the N service apparatuses is configured to provide a vehicle service for the vehicle.

The first apparatus determines the M service apparatuses based on the obtained travel information of the vehicle, and makes the service reservation of the N service apparatuses in the M service apparatuses. In this way, a user is prevented from manually selecting a service apparatus for a reservation, and vehicle use convenience and vehicle use safety of the user are improved.

In a possible implementation, determining the M service apparatuses based on the travel information includes: determining, based on the path information and the energy consumption information, whether the vehicle meets a first condition; and when the vehicle meets the first condition, determining the M service apparatuses, where the first condition includes at least one of the following:
a range that remaining energy of the vehicle supports the vehicle to travel is less than a traveling range for reaching a first target location indicated by the path information;
a remaining range of the vehicle is less than the traveling range for reaching the first target location indicated by the path information; and
remaining energy or a remaining range is less than or equal to a first threshold when the vehicle travels to a first location, where the first location is a location that the vehicle reaches before traveling to the first target location.

When it is difficult for energy of the vehicle to complete a travel path indicated by the path information, a service reservation is made for the vehicle, so that the vehicle can accept a vehicle service before the energy is exhausted, to ensure that the vehicle service is provided before vehicle use is affected.

In a possible implementation, determining the M service apparatuses includes: matching the M service apparatuses within a first location range, where the first location range is a location range between a current location of the vehicle and the first location, and the remaining energy or the remaining range is less than or equal to the first threshold when the vehicle travels to the first location.

The service apparatus is matched within the first location range determined based on the first location, so that the vehicle can accept, near a first energy exhaustion point, the vehicle service provided by the service apparatus. When the first location range is determined based on the second location, the vehicle can accept the vehicle service before the energy is exhausted. In conclusion, the first apparatus can reserve the service apparatus within the first location range to ensure that the vehicle service is provided before vehicle use is affected.

In a possible implementation, determining the M service apparatuses based on the travel information includes: determining, based on the path information and the energy consumption information, that remaining energy or a remaining range is less than or equal to a first threshold when the vehicle travels to a first target location indicated by the path information; determining an allowed service time of the vehicle based on the travel plan information; and determining the M service apparatuses based on the allowed service time of the vehicle.

When the energy of the vehicle can basically maintain completion of the travel path indicated by the path information, the first apparatus determines the M service apparatuses with reference to the allowed service time of the vehicle, so that a balance between energy consumption and a travel plan can be achieved, and interference caused by the vehicle service to the travel plan can be avoided.

In a possible implementation, determining the M service apparatuses based on the allowed service time of the vehicle includes at least one of the following: when the allowed service time is greater than or equal to a first time threshold, obtaining the M service apparatuses through matching within a second location range of the vehicle service; or when the allowed service time is less than or equal to a second time threshold, obtaining the M service apparatuses through matching within a third location range of the vehicle service, where the second location range is a location range between a current location of the vehicle and the first target location, and the third location range is a location range determined based on the first target location.

In a possible implementation, both the first time threshold and the second time threshold are in a first proportional relationship with a travel time indicated by the travel plan information, and the travel time is a time required for the vehicle to reach the first target location indicated by the path information from the current location.

The vehicle may reserve a vehicle service when the allowed service time indicated by the travel plan is sufficient, to avoid impact on vehicle traveling due to lack of a vehicle service during next traveling. The vehicle does not reserve a vehicle service when the allowed service time is insufficient, to avoid impact on the travel plan.

In a possible implementation, determining the M service apparatuses based on the travel information includes: determining, based on the path information and the energy consumption information, that remaining energy or a remaining range is greater than or equal to a second threshold when the vehicle travels to a first target location indicated by the path information; determining, based on the travel plan information, whether a time interval between a time at which the vehicle reaches the first target location and a time at which the vehicle travels next time is greater than or equal to a third time threshold; and when the time interval is greater than or equal to the third time threshold, determining the M service apparatuses.

When the energy of the vehicle is sufficient to complete the travel path indicated by the path information, the first apparatus may provide an intelligent decision-making solution for reserving a vehicle service without reserving a service apparatus, to avoid that an unnecessary vehicle service affects convenience of using the vehicle by the user.

In a possible implementation, determining the M service apparatuses includes: determining a location range of the vehicle service based on the first target location, and matching the M service apparatuses within the location range of the vehicle service.

The M service apparatuses are matched within the location range determined based on the first target location. When the vehicle travels based on a path indicated by the path information, changes to the travel path can be reduced. In addition, incapability of reaching the first target location based on the travel plan due to an emergency like a traffic jam on a subsequent road section caused by going to a service apparatus that is far away from the first target location on the way can be avoided.

In a possible implementation, determining the M service apparatuses based on the travel information includes: determining a time range and a service range of the vehicle based on the travel information; and matching the M service apparatuses within the time range and the service range.

The M service apparatuses are matched based on the time range and the service range, to further improve matching between the service apparatus and the vehicle used by the user.

In a possible implementation, determining the M service apparatuses based on the travel information includes: determining the M service apparatuses based on the travel information and reservation assistance information, where the reservation assistance information includes at least one of the following: account information of the vehicle; attribute information of the vehicle; and user preference information.

The first apparatus determines the M service apparatuses with reference to the reservation assistance information, so that a matching degree between the service apparatus and the user or a matching degree between the service apparatus and the vehicle used by the user can be improved.

In a possible implementation, determining the M service apparatuses includes: determining the M service apparatuses based on the path information and service reference information.

When reserving the service apparatus, the first apparatus may provide vehicle service solutions with different benefits for different vehicles with reference to the service reference information of the vehicle.

Optionally, the vehicle service includes an energy supplement service and/or a parking service.

Optionally, the vehicle service includes a reverse energy supplement service.

In a possible implementation, determining the M service apparatuses based on the travel information includes: determining, based on the path information and the energy consumption information, that remaining energy or a remaining range is greater than or equal to a third threshold when the vehicle travels to a first target location indicated by the path information; and determining the M service apparatuses.

When the remaining energy of the vehicle is sufficient, the M service apparatuses are determined, and then the reverse energy supplement service is reserved, to ensure that reverse energy supplement of the vehicle does not affect traveling of the vehicle to the first target location.

In a possible implementation, the N service apparatuses are first N service apparatuses in the M service apparatuses that are sorted in descending order of service benefits. The reverse energy supplement accepted by the user has a high benefit.

In a possible implementation, the method further includes: sending first recommendation information to a vehicle end, where the first recommendation information indicates the M service apparatuses; and receiving service response information sent by the vehicle end, where the service response information indicates the N service apparatuses. A service reservation is made for the N service apparatuses selected by the user from the M matched service apparatuses, so that the user can select a reserved service apparatus, and a requirement of the user for a vehicle service is further met.

In a possible implementation, if the vehicle service includes a reverse energy supplement service, the first recommendation information further includes at least one of a service benefit, a consumed time, a location, and the like that correspond to each of the M service apparatuses. When the M matched service apparatuses are recommended to the user, related information of the service apparatus is provided, so that the user selects the service apparatus based on a preference.

In a possible implementation, the method further includes: sending second recommendation information to the vehicle end, where the second recommendation information indicates modifiable reservation information, and the reservation information includes the travel information of the vehicle and/or reservation assistance information; and receiving reservation adjustment information sent by the vehicle end, where the reservation adjustment information is used to modify the reservation information.

The first apparatus may fail to successfully reserve the service apparatus. For example, the service apparatus fails to be matched, or all the M matched service apparatuses fail to be reserved. In this case, a service reservation range is adjusted, so that the service apparatus is successfully reserved.

In a possible implementation, the method further includes: receiving a reservation cancellation instruction sent by the vehicle end, where the reservation cancellation instruction instructs to cancel a reservation of a service apparatus that is successfully reserved; and canceling the reservation of the service apparatus.

When the target location of the vehicle is changed, for example, the first target location indicated by the path information is changed to a second target location, if a service apparatus has been reserved in this case, the reserved service apparatus may have a low matching degree due to the change of the target location. In this case, the reservation of the service apparatus may be canceled. This further implements automatic control of the reservation.

In a possible implementation, before the canceling the reservation of the service apparatus, the method further includes: sending cancellation prompt information to the vehicle end, where the cancellation prompt information indicates a quantity of remaining reservation times. In this way, the user is notified of the quantity of remaining reservation times, to avoid a case in which the user cannot make a vehicle service reservation due to lack of a reservation opportunity after blindly canceling the reservation.

In a possible implementation, the method further includes: determining, based on vehicle brand information of the vehicle, that the N service apparatuses provide an additional vehicle service, where the additional vehicle service includes at least one of the following: an unlimited reservation, a queue-free reservation, battery diagnosis, and vehicle maintenance. By matching with a brand user, service experience of the brand user is improved.

According to a second aspect, an embodiment of this application provides a vehicle service reservation method, including: sending a reservation request to a service end, where the reservation request is used to request the service end to make a service reservation based on travel information, and the travel information includes path information, travel plan information, and energy consumption information; and receiving a service reservation result sent by the service end, where the service reservation result indicates reservation results of N service apparatuses, the N service apparatuses are determined based on the travel information, and a service apparatus that is successfully reserved in the N service apparatuses is configured to provide a vehicle service for the vehicle.

In some possible implementations, the reservation request carries at least one of the path information, the travel plan information, and the energy consumption information.

In a possible implementation, the method further includes: sending reservation assistance information to the service end, where the reservation assistance information is used to determine the M service apparatuses with reference to the travel information, and the reservation assistance information includes at least one of the following: account information of the vehicle, attribute information of the vehicle, and user preference information.

In a possible implementation, the vehicle service includes at least one of an energy supplement service, a parking service, and a reverse energy supplement service.

In a possible implementation, the method further includes: receiving first recommendation information sent by the service end, where the first recommendation information indicates the M service apparatuses; presenting the first recommendation information; receiving a service apparatus selection instruction entered by a user, where the service apparatus selection instruction instructs to select the N service apparatuses from the M service apparatuses; and sending service response information to the service end, where the service response information indicates the N service apparatuses.

In a possible implementation, if the vehicle service includes a reverse energy supplement service, the first recommendation information further includes at least one of a service benefit, a consumed time, a location, and the like that correspond to each of the M service apparatuses.

In a possible implementation, the method further includes: receiving second recommendation information sent by the service end, where the second recommendation information indicates modifiable reservation information, and the reservation information includes the travel information of the vehicle and/or reservation assistance information; presenting the second recommendation information; receiving a reservation adjustment instruction entered by the user, where the reservation adjustment instruction instructs to modify the reservation information; and sending the reservation adjustment information to the service end.

In a possible implementation, the method further includes: receiving a reservation result sent by the service end, where the reservation result includes location information of a service apparatus that is successfully reserved and/or an identifier of the service apparatus, and/or reservation waiting duration or reservation waiting person-times for a service apparatus that fails to be reserved.

In a possible implementation, the method further includes: receiving a target location change instruction entered by the user, where the target location change instruction instructs to change a first target location in the path information to a second target location; presenting reservation prompt information when the service apparatus is successfully reserved, where the reservation prompt information indicates that the service apparatus is successfully reserved; receiving a reservation determining instruction entered by the user, where the reservation determining instruction instructs to set a path on which the vehicle travels to the service apparatus that is successfully reserved as a path in the path information, or instructs to cancel a reservation of the service apparatus that is successfully reserved; and sending a reservation cancellation instruction to the service end when the reservation determining instruction instructs to cancel the reservation of the service apparatus that is successfully reserved.

In a possible implementation, before the canceling the reservation of the service apparatus, the method further includes: receiving cancellation prompt information sent by the service end, where the cancellation prompt information indicates a quantity of remaining reservation times.

For beneficial effects of the vehicle service reservation method provided in the second aspect and the possible implementations of the second aspect, refer to beneficial effects achieved by the first aspect and the possible implementations of the first aspect. Details are not described herein again.

According to a third aspect, an embodiment of this application provides a reservation apparatus, including: an obtaining module, configured to obtain travel information of a vehicle, where the travel information includes path information, travel plan information, and energy consumption information; a matching module, configured to determine M service apparatuses based on the travel information, where M is a positive integer; and a reservation module, configured to make a service reservation of N service apparatuses in the M service apparatuses, where N is a positive integer less than or equal to M, and a service apparatus that is successfully reserved in the N service apparatuses is configured to provide a vehicle service for the vehicle.

In a possible implementation, the matching module is specifically configured to: determine, based on the path information and the energy consumption information, whether the vehicle meets a first condition; and when the vehicle meets the first condition, determine the M service apparatuses, where the first condition includes at least one of the following:
a range that remaining energy of the vehicle supports the vehicle to travel is less than a traveling range for reaching a first target location indicated by the path information;
a remaining range of the vehicle is less than the traveling range for reaching the first target location indicated by the path information; and
remaining energy or a remaining range is less than or equal to a first threshold when the vehicle travels to a first location, where the first location is a location that the vehicle reaches before traveling to the first target location.

In a possible implementation, the matching module is specifically configured to: match the M service apparatuses within a first location range, where the first location range is a location range between a current location of the vehicle and the first location, and the remaining energy or the remaining range is less than or equal to the first threshold when the vehicle travels to the first location.

In a possible implementation, the matching module is specifically configured to: determine, based on the path information and the energy consumption information, that remaining energy or a remaining range is less than or equal to the first threshold when the vehicle travels to the first target location indicated by the path information; determine an allowed service time of the vehicle based on the travel plan information; and determine the M service apparatuses based on the allowed service time of the vehicle.

In a possible implementation, the matching module is specifically configured to: when the allowed service time is greater than or equal to a first time threshold, obtain the M service apparatuses through matching within a second location range of the vehicle service; or when the allowed service time is less than or equal to a second time threshold, obtain the M service apparatuses through matching within a third location range of the vehicle service, where the second location range is a location range between the current location of the vehicle and the first target location, and the third location range is a location range determined based on the first target location.

In a possible implementation, both the first time threshold and the second time threshold are in a first proportional relationship with a travel time indicated by the travel plan information, and the travel time is a time required for the vehicle to reach the first target location indicated by the path information from the current location.

In a possible implementation, the matching module is specifically configured to: determine, based on the path information and the energy consumption information, that remaining energy or a remaining range is greater than or equal to a second threshold when the vehicle travels to a first target location indicated by the path information; determine, based on the travel plan information, whether a time interval between a time at which the vehicle reaches the first target location and a time at which the vehicle travels next time is greater than or equal to a third time threshold; and when the time interval is greater than or equal to the third time threshold, determine the M service apparatuses.

In a possible implementation, the matching module is specifically configured to: determine a location range of the vehicle service based on the first target location, and match the M service apparatuses within the location range of the vehicle service.

In a possible implementation, the matching module is specifically configured to: determine a time range and a service range of the vehicle service based on the travel information; and match the M service apparatuses within the time range and the service range.

In a possible implementation, the matching module is specifically configured to determine the M service apparatuses based on the travel information and reservation assistance information, where the reservation assistance information includes at least one of the following:
account information of the vehicle;
attribute information of the vehicle; and
user preference information.

In a possible implementation, the matching module is specifically configured to determine the M service apparatuses based on the path information and service reference information.

In a possible implementation, the vehicle service includes an energy supplement service and/or a parking service.

In a possible implementation, the vehicle service includes a reverse energy supplement service, and the matching module is specifically configured to: determine, based on the path information and the energy consumption information, that remaining energy or a remaining range is greater than or equal to a third threshold when the vehicle travels to a first target location indicated by the path information; and determine the M service apparatuses.

In a possible implementation, the N service apparatuses are first N service apparatuses in the M service apparatuses that are sorted in descending order of service benefits.

In a possible implementation, the apparatus further includes: a transceiver module, configured to send first recommendation information to a vehicle end, where the first recommendation information indicates the M service apparatuses. The transceiver module is further configured to receive service response information sent by the vehicle end, where the service response information indicates the N service apparatuses.

In a possible implementation, if the vehicle service includes a reverse energy supplement service, the first recommendation information further includes at least one of a service benefit, a consumed time, a location, and the like that correspond to each of the M service apparatuses.

In a possible implementation, the apparatus further includes: a transceiver module, configured to send second recommendation information to the vehicle end, where the second recommendation information indicates modifiable reservation information, and the reservation information includes travel information of the vehicle and/or reservation assistance information. The transceiver module is further configured to receive reservation adjustment information sent by the vehicle end, where the reservation adjustment information is used to modify the reservation information.

In a possible implementation, the apparatus further includes: a transceiver module, configured to send a reservation result to the vehicle end, where the reservation result includes location information of a service apparatus that is successfully reserved and/or an identifier of the service apparatus, and/or reservation waiting duration or reservation waiting person-times for a service apparatus that fails to be reserved.

In a possible implementation, the apparatus further includes: a transceiver module, configured to receive a reservation cancellation instruction sent by the vehicle end, where the reservation cancellation instruction instructs to cancel a reservation of a service apparatus that is successfully reserved. The reservation module is further configured to cancel the reservation of the service apparatus.

In a possible implementation, before canceling the reservation of the service apparatus, the transceiver module is further configured to: send cancellation prompt information to the vehicle end, where the cancellation prompt information indicates a quantity of remaining reservation times.

In a possible implementation, the matching module is further configured to determine, based on vehicle brand information of the vehicle, that the N service apparatuses provide additional vehicle services, where the additional vehicle services include at least one of the following:
an unlimited reservation;
a queue-free reservation;
battery diagnosis; and
vehicle maintenance.

For beneficial effects of the reservation apparatus provided in the third aspect and the possible implementations of the third aspect, refer to beneficial effects achieved by the first aspect and the possible implementations of the first aspect. Details are not described herein again.

According to a fourth aspect, an embodiment of this application provides a reservation apparatus, including: a transceiver module, configured to send a reservation request to a service end, where the reservation request is used to request the service end to make a service reservation based on travel information, and the travel information includes path information, travel plan information, and energy consumption information. The transceiver module is further configured to receive a service reservation result sent by the service end, where the service reservation result indicates reservation results of N service apparatuses, the N service apparatuses are determined based on the travel information, and a service apparatus that is successfully reserved in the N service apparatuses is configured to provide a vehicle service for the vehicle.

In a possible implementation, the reservation request carries at least one of the path information, the travel plan information, and the energy consumption information.

In a possible implementation, the transceiver module is further configured to send reservation assistance information to the service end, where the reservation assistance information is used to determine the M service apparatuses with reference to the travel information, and the reservation assistance information includes at least one of the following:
account information of the vehicle;
attribute information of the vehicle; and
user preference information.

In a possible implementation, the vehicle service includes at least one of an energy supplement service, a parking service, and a reverse energy supplement service.

In a possible implementation, the transceiver module is further configured to: receive first recommendation information sent by the service end, where the first recommendation information indicates the M service apparatuses. A display module is configured to present the first recommendation information. The transceiver module is further configured to receive a service apparatus selection instruction entered by a user, where the service apparatus selection instruction instructs to select the N service apparatuses from the M service apparatuses. The transceiver module is further configured to send service response information to the service end, where the service response information indicates the N service apparatuses.

In a possible implementation, if the vehicle service includes a reverse energy supplement service, the first recommendation information further includes at least one of a service benefit, a consumed time, a location, and the like that correspond to each of the M service apparatuses.

In a possible implementation, the transceiver module is further configured to: receive second recommendation information sent by the service end, where the second recommendation information indicates modifiable reservation information, and the reservation information includes travel information of the vehicle and/or reservation assistance information. A display module is configured to present the second recommendation information. The transceiver module is further configured to receive a reservation adjustment instruction entered by the user, where the reservation adjustment instruction instructs to modify the reservation information. The transceiver module is further configured to send the reservation adjustment information to the service end.

In a possible implementation, the transceiver module is further configured to: receive a reservation result sent by the service end, where the reservation result includes location information of a service apparatus that is successfully reserved and/or an identifier of the service apparatus, and/or reservation waiting duration or reservation waiting person-times for a service apparatus that fails to be reserved.

In a possible implementation, the transceiver module is further configured to: receive a target location change instruction entered by the user, where the target location change instruction instructs to change a first target location in the path information to a second target location. The display module is configured to present reservation prompt information when a service apparatus is successfully reserved, where the reservation prompt information indicates that the service apparatus is successfully reserved. The transceiver module is further configured to receive a reservation determining instruction entered by the user, where the reservation determining instruction instructs to set a path on which the vehicle travels to the service apparatus that is successfully reserved as a path in the path information, or instructs to cancel a reservation of the service apparatus that is successfully reserved. The transceiver module is further configured to send a reservation cancellation instruction to the service end when the reservation determining instruction instructs to cancel the reservation of the service apparatus that is successfully reserved.

In a possible implementation, before canceling the reservation of the service apparatus, the transceiver module is further configured to: receive cancellation prompt information sent by the service end, where the cancellation prompt information indicates a quantity of remaining reservation times.

For beneficial effect of the chip provided in the fourth aspect and the possible implementations of the fourth aspect, refer to beneficial effect achieved by the first aspect and the possible implementations of the first aspect. Details are not described herein again.

According to a fifth aspect, an embodiment of this application provides a reservation system, including a first apparatus and a second apparatus. The first apparatus may be deployed on a service end and/or a cloud, and the second apparatus may be deployed on a vehicle end and/or the cloud. The second apparatus sends a reservation request to the first apparatus, where the reservation request is used to request the first apparatus to make a service reservation based on travel information, and the travel information includes path information, travel plan information, and energy consumption information; the first apparatus determines M service apparatuses based on the travel information, where M is a positive integer; and the first apparatus makes a service reservation of N service apparatuses in the M service apparatuses, where N is a positive integer less than or equal to M, and a service apparatus that is successfully reserved in the N service apparatuses is configured to provide a vehicle service for the vehicle.

In a possible implementation, the first apparatus is configured to: determine, based on the path information and the energy consumption information, whether the vehicle meets a first condition; and when the vehicle meets the first condition, determine the M service apparatuses, where the first condition includes at least one of the following:
a range that remaining energy of the vehicle supports the vehicle to travel is less than a traveling range for reaching a first target location indicated by the path information;
a remaining range of the vehicle is less than the traveling range for reaching the first target location indicated by the path information; and
remaining energy or a remaining range is less than or equal to a first threshold when the vehicle travels to a first location, where the first location is a location that the vehicle reaches before traveling to the first target location.

In a possible implementation, the first apparatus is specifically configured to: match the M service apparatuses within a first location range, where the first location range is a location range between a current location of the vehicle and the first location, and the remaining energy or the remaining range is less than or equal to the first threshold when the vehicle travels to the first location.

In a possible implementation, the first apparatus is specifically configured to: determine, based on the path information and the energy consumption information, that remaining energy or a remaining range is less than or equal to a first threshold when the vehicle travels to a first target location indicated by the path information; determine an allowed service time of the vehicle based on the travel plan information; and determine the M service apparatuses based on the allowed service time of the vehicle.

In a possible implementation, the first apparatus is specifically configured to: when the allowed service time is greater than or equal to a first time threshold, obtain the M service apparatuses through matching within a second location range of the vehicle service; or when the allowed service time is less than or equal to a second time threshold, obtain the M service apparatuses through matching within a third location range of the vehicle service, where the second location range is a location range between a current location of the vehicle and the first target location, and the third location range is a location range determined based on the first target location.

In a possible implementation, both the first time threshold and the second time threshold are in a first proportional relationship with a travel time indicated by the travel plan information, and the travel time is a time required for the vehicle to reach the first target location indicated by the path information from the current location.

In a possible implementation, the first apparatus is specifically configured to: determine, based on the path information and the energy consumption information, that remaining energy or a remaining range is greater than or equal to a second threshold when the vehicle travels to a first target location indicated by the path information; determine, based on the travel plan information, whether a time interval between a time at which the vehicle reaches the first target location and a time at which the vehicle travels next time is greater than or equal to a third time threshold; and when the time interval is greater than or equal to the third time threshold, determine the M service apparatuses.

In a possible implementation, the first apparatus is specifically configured to: determine a location range of the vehicle service based on the first target location, and match the M service apparatuses within the location range of the vehicle service.

In a possible implementation, the first apparatus is specifically configured to: determine the M service apparatuses based on the path information and service reference information.

In a possible implementation, the vehicle service includes an energy supplement service and/or a parking service.

In a possible implementation, the vehicle service includes a reverse energy supplement service, and the first apparatus is specifically configured to: determine, based on the path information and the energy consumption information, that remaining energy or a remaining range is greater than or equal to a third threshold when the vehicle travels to a first target location indicated by the path information; and determine the M service apparatuses.

In a possible implementation, the N service apparatuses are first N service apparatuses in the M service apparatuses that are sorted in descending order of service benefits.

In a possible implementation, the reservation request carries at least one of the path information, the travel plan information, and the energy consumption information.

In a possible implementation, the first apparatus sends first recommendation information to the second apparatus, where the first recommendation information indicates the M service apparatuses; the second apparatus presents the first recommendation information; the second apparatus receives a service apparatus selection instruction entered by a user, where the service apparatus selection instruction instructs to select the N service apparatuses from the M service apparatuses; and the second apparatus sends service response information to the first apparatus, where the service response information indicates the N service apparatuses.

In a possible implementation, the first apparatus sends second recommendation information to the second apparatus, where the second recommendation information indicates modifiable reservation information, and the reservation information includes the travel information of the vehicle and/or reservation assistance information; the second apparatus presents the second recommendation information; the second apparatus receives a reservation adjustment instruction entered by the user, where the reservation adjustment instruction instructs to modify the reservation information; and the second apparatus sends reservation adjustment information to the first apparatus.

In a possible implementation, the second apparatus receives a target location change instruction entered by the user, where the target location change instruction instructs to change the first target location in the path information to a second target location; the second apparatus presents reservation prompt information when a service apparatus is successfully reserved, where the reservation prompt information indicates that the service apparatus is successfully reserved; the second apparatus receives a reservation determining instruction entered by the user, where the reservation determining instruction instructs to set a path on which the vehicle travels to the service apparatus that is successfully reserved as a path in the path information, or instructs to cancel a reservation of the service apparatus that is successfully reserved; and the second apparatus sends a reservation cancellation instruction to the first apparatus when the reservation determining instruction instructs to cancel the reservation of the service apparatus that is successfully reserved.

In a possible implementation, the first apparatus sends a service reservation result to the second apparatus, where the service reservation result indicates reservation results of the N service apparatuses.

According to a sixth aspect, an embodiment of this application provides a chip, including a processor, configured to: invoke computer instructions from a memory and run the computer instructions, so that a device in which the chip is installed performs the method according to any one of the first aspect, the second aspect, or the possible implementations.

According to a seventh aspect, an embodiment of this application provides an electronic device, including a processor and a memory. The memory is configured to store a computer program, and the processor is configured to invoke and run the computer program stored in the memory, to perform the method according to any one of the first aspect, the second aspect, or the possible implementations.

According to an eighth aspect, an embodiment of this application provides a computer-readable storage medium, configured to store computer program instructions, and the computer program enables a computer to perform the method according to the first aspect, the second aspect, or the possible implementations.

According to a ninth aspect, an embodiment of this application provides a computer program product, including computer program instructions. The computer program instructions enable a computer to perform the method according to the first aspect, the second aspect, or the possible implementations.

### BRIEF DESCRIPTION OF DRAWINGS

FIG. 1 is a diagram of a vehicle service reservation system according to an embodiment of this application;
FIG. 2 is a schematic flowchart of a vehicle service reservation method according to an embodiment of this application;
FIG. 3 is a schematic flowchart of a vehicle service reservation method according to an embodiment of this application;
FIG. 4 is a schematic flowchart of interaction of a vehicle service reservation method according to an embodiment of this application;
FIG. 5 is a schematic flowchart of interaction of a vehicle service reservation method according to an embodiment of this application;
FIG. 6 is a schematic flowchart of interaction of a vehicle service reservation method according to an embodiment of this application;
FIG. 7 is a schematic flowchart of interaction of a vehicle service reservation method according to an embodiment of this application;
FIG. 8 is a block diagram of a reservation apparatus according to an embodiment of this application;
FIG. 9 is a block diagram of a reservation apparatus according to an embodiment of this application; and
FIG. 10 is a block diagram of an electronic device according to an embodiment of this application.

### DESCRIPTION OF EMBODIMENTS

The following describes the technical solutions in embodiments of this application with reference to the accompanying drawings in embodiments of this application.

A vehicle in embodiments of this application may be an intelligent vehicle, for example, an autonomous driving vehicle that implements all functions as automatic control, or an assisted driving vehicle that implements some functions as automatic control to provide driving assistance, or may be a common vehicle. For ease of description, the vehicle is collectively referred to as a vehicle in the following. In addition, the vehicle in embodiments of this application may alternatively be a common vehicle. In this case, the vehicle may be automatically controlled through an external device of the vehicle.

In this application, an intelligent reservation of a vehicle service for any type of vehicle, for example, a fuel vehicle or a new energy vehicle, can be implemented. The vehicle service may include an energy supplement service, a parking service, a reverse energy supplement service, and the like. For example, when the vehicle is a new energy vehicle, the energy supplement service may be a charging service. After the charging service is reserved for the vehicle, the vehicle may reach a specified charging pile location for charging. Certainly, based on a difference in energy required by the new energy vehicle, the charging service may alternatively be replaced with a methane supplement service or the like. The parking service may provide a parking location reserved according to any parking requirement in a travelling process of the vehicle. For example, the parking requirement may include waiting for an energy supplement service, providing a necessary vehicle component rest time (for example, reducing a water temperature of the vehicle) during long-distance traveling, and preventing fatigue driving or shopping. However, a user usually expects that a vehicle service occurs on a travel path (including a start point and/or an end point of traveling) of the vehicle. Currently, based on manual selection of the user, the user usually wants to reserve an appropriate vehicle service on the travel path. Consequently, service reservation experience is poor, and vehicle use convenience is affected. In addition, if the user performs a reservation operation in a driving process, driving safety is affected.

Manual selecting of a vehicle service resource by the user leads to a problem that vehicle use convenience and driving safety are low. According to an intelligent vehicle service reservation solution provided in embodiments of this application, travel information of the vehicle is introduced, and a vehicle service is reserved based on the travel information, to improve vehicle use convenience and driving safety of the user.

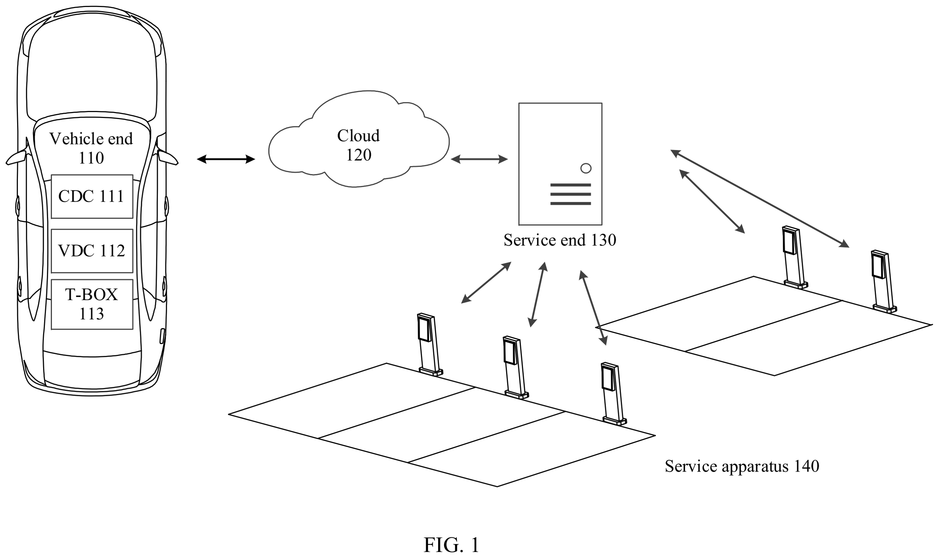

FIG. 1 is a diagram of a vehicle service reservation system according to an embodiment of this application. As shown in FIG. 1, the system 100 includes a vehicle end 110, a cloud 120, a service end 130, and a service apparatus 140 for providing a vehicle service.

The vehicle end 110 may be implemented, on software, as an in-vehicle client of the vehicle service, for example, an application (application, APP) or an applet running in a vehicle system. The vehicle end 110 may be implemented, on hardware, as a device in the vehicle, including some or all of a cockpit domain controller (cockpit domain controller, CDC) 111, a vehicle domain controller (vehicle domain controller, VDC) 112, and a telematics box (telematics box, T-BOX) 113. The CDC 111 and the VDC 112 may interact with the cloud through the T-BOX.

The CDC 111 may be connected to a human machine interaction apparatus, to control the human machine interaction apparatus to interact with a user, for example, present information and obtain an instruction of the user. The human machine interaction apparatus includes but is not limited to a display, a speaker, a microphone, and the like. The display may be configured to present a human machine interaction interface (human machine interface, HMI).

The VDC 112 may be configured to perform data processing. For example, the VDC 112 may generate a control instruction, to control the CDC 111 to provide a human machine interaction function for the user. The VDC 112 may further provide the CDC 111 with attribute information (such as a brand, a model, and a vehicle parameter) of the vehicle, vehicle path information, energy consumption information, account information of the vehicle, travel plan information, and the like.

The service end 130 may be run by a vehicle service provider. For example, the service end may be an operating system that provides a vehicle service reservation for a charging station or a parking lot. The operating system may be implemented, on hardware, as a server or a terminal. The service end 130 may be communicatively connected to the cloud 120.

The service end 130 may be configured to implement retrieval, matching, and a reservation of a service apparatus. Certainly, this is not limited in this application. For example, retrieval and matching of a service apparatus may alternatively be executed by the cloud 120, and an execution result is sent to the service end 130, so that the service end 130 reserves a vehicle service based on the execution result of the cloud 120.

When the service end 130 is configured to implement retrieval, matching, and a reservation of a service apparatus, the cloud 120 may be configured to forward, to the service end 130, information sent by the vehicle end 110, or the cloud 120 may process information sent by the vehicle end 110 and then send processed information to the service end 130. For example, the cloud 120 may estimate, based on battery stage of charge information and path information that are sent by the vehicle end 110, remaining energy for the vehicle to reach a target location, and send the estimated remaining energy to the service end 130.

The service end 130 is communicatively connected to the service apparatus 140. The service apparatus 140 may include an apparatus configured to provide a vehicle service, for example, at least one of an energy supplement apparatus 141, a parking space control apparatus 142, and a reverse energy supplement apparatus 143. A quantity of communication apparatuses is not limited in embodiments of this application.

The service end 130 may obtain service data of the service apparatus 140, for example, whether the service apparatus 140 is being used or has been reserved. The service end 130 may further send a reservation instruction to at least one service apparatus in the service apparatus 140, so that the at least one service apparatus provides a vehicle service for a corresponding vehicle.

The cloud 120 may be implemented as a cloud server or a cloud service platform. The cloud 120 includes but is not limited to a navigation cloud, a vehicle cloud, and the like.

With reference to the accompanying drawings, the following describes in detail the vehicle service reservation method provided in embodiments of this application.

For ease of understanding and description, the following describes the method provided in embodiments of this application by using a first apparatus as an execution body. The first apparatus may be a service reservation requester. For example, the first apparatus may be the service end 130 in FIG. 1, or the first apparatus may be deployed on the service end 130 and implemented as a component in the service end 130. Alternatively, the first apparatus may include the cloud 120 and the service end 130 in FIG. 1, or the first apparatus may be deployed on the cloud 120 and the service end 130 in a distributed manner, and is implemented as a component in the cloud 120 and the service end 130.

In some embodiments, interaction between the first apparatus and a second apparatus is used as an example to describe the method provided in embodiments of this application. The second apparatus may be a service reservation responder. For example, the second apparatus may be the vehicle end 110 in FIG. 1, or the second apparatus may be deployed on the vehicle end 110 and implemented as a component (for example, a CDC and/or a VDC) in the vehicle end 110. Alternatively, the second apparatus may include the vehicle end 110 and the cloud 120 in FIG. 1, or the second apparatus may be deployed on the vehicle end 110 and the cloud 120 in a distributed manner, and is implemented as a component in the vehicle end 110 and the cloud 120. Optionally, both the first apparatus and the second apparatus may be referred to as reservation apparatuses.

Interaction between the vehicle end and the service end may be data exchange implemented by a communication connection between the vehicle end and the service end via the cloud, and the cloud performs data transparent transmission between the vehicle end and the service end. Interaction between the vehicle end and the cloud may be data exchange implemented by a communication connection between the vehicle end and the cloud, and interaction between the service end and the cloud may be data exchange implemented by a communication connection between the service end and the cloud.

However, it should be understood that this shall not constitute any limitation on an execution body of the method provided in this application. Any device that can perform, by using a program that can run code of the method provided in embodiments of this application, the method provided in embodiments of this application may be used as an execution body of the method provided in embodiments of this application. For example, the vehicle end may alternatively be replaced with a control apparatus (including a CDC and/or a VDC) of the vehicle, a chip, a chip system, or another functional module that can invoke and execute a program. The cloud may alternatively be replaced with a cloud server, a chip, a chip system, another functional module that can invoke and execute a program, or the like. The service end may alternatively be replaced with a server, a terminal, a chip, a chip system, another functional module that can invoke and execute a program, or the like.

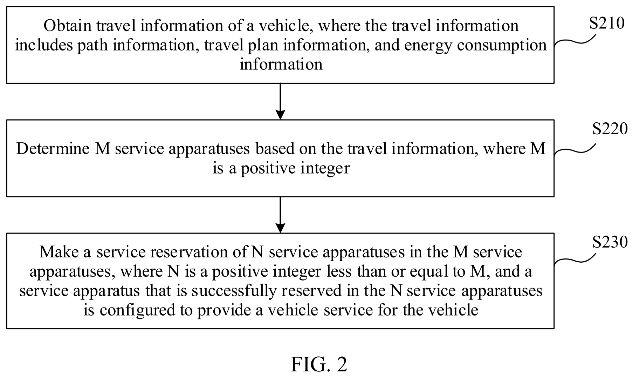

FIG. 2 is a schematic flowchart of a vehicle service reservation method 200 according to an embodiment of this application. As shown in FIG. 2, the method 200 may include some or all of the following processes.

S210: Obtain travel information of a vehicle, where the travel information includes path information, travel plan information, and energy consumption information.

S220: Determine M service apparatuses based on the travel information, where M is a positive integer.

S230: Make a service reservation of N service apparatuses in the M service apparatuses, where N is a positive integer less than or equal to M, and a service apparatus that is successfully reserved in the N service apparatuses is configured to provide a vehicle service for the vehicle.

When a first apparatus is implemented as a service end, S210 to S230 are all performed by the service end. That the first apparatus obtains the travel information of the vehicle may be that the service end receives travel information sent by a cloud.

When the first apparatus is implemented as the cloud and the service end, S210 may be performed by the cloud. For example, the cloud may receive travel information sent by a vehicle end, or the cloud may read stored travel information, or the cloud may receive some information in travel information sent by a vehicle end and read some information in stored travel information. S220 may be performed by the cloud or the service end. When S220 is performed by the service end, the cloud may send the travel information to the service end, so that the service end determines the M service apparatuses based on the travel information. S230 may be performed by the service end.

The path information in the travel information may indicate a path for the vehicle to reach a first target location. For example, the vehicle end may send the first target location to the cloud, and the cloud determines the path information based on the first target location. Certainly, in this application, the vehicle end may generate path information for reaching the first target location based on an offline map, and send the path information to the cloud. In addition, the first target location may alternatively be indicated by the travel plan information. In this case, the cloud may determine the first target location from the travel plan information, and generate the path information based on the first target location.

The travel plan information in the travel information may be calendar trip information or a travel plan. The travel plan information may include a time plan for reaching the first target location. The travel plan information may be sent by the vehicle end to the cloud in a reservation process, or may be sent by the vehicle end to the cloud in advance and stored in the cloud.

The energy consumption information in the travel information may be an energy consumption parameter of the vehicle, or the energy consumption information may be an estimated vehicle endurance range that is determined based on the energy consumption parameter of the vehicle. The energy consumption parameter may include at least one of a battery parameter and a power parameter of the vehicle. The battery parameter may include a parameter that reflects remaining state of charge, for example, at least one of a state of charge (state of charge, SOC), a state of health (state of health, SOH) of the power battery, a depth of discharge (depth of discharge, DOD) of a battery pack, and a state of energy (state of energy, SOE) of a battery. The power parameter may include a parameter that reflects power consumption of the vehicle per unit range. It should be noted that, vehicles corresponding to different energy sources may have different energy consumption parameters. For example, for a fuel vehicle, the energy consumption parameter may include a parameter that reflects a remaining fuel amount and a parameter that reflects fuel consumption per unit range of the vehicle.

The M service apparatuses may be obtained through matching from a resource pool of the service apparatus. For example, the resource pool may include a service apparatus within a specific area range, for example, a city or a province. For another example, the resource pool may include a service apparatus owned by a service provider. The resource pool may include service apparatuses that are differentiated in at least one dimension, to match different travel information and provide a more appropriate vehicle service for the user. For example, geographical locations at which the service apparatuses are deployed may be different, vehicle services (for example, parking, charging, and parking plus charging) provided by the service apparatuses may be different, and service capabilities (for example, charging rates and charging powers) provided by the service apparatuses may be different.

The N service apparatuses may be apparatuses that are in the M service apparatuses and that can provide a vehicle service. For example, the N service apparatuses are service apparatuses in a running status in the M service apparatuses, and remaining M-N service apparatuses are service apparatuses in a non-running status. For another example, the N service apparatuses are service apparatuses in an idle state in the M service apparatuses, and remaining M-N service apparatuses may have been reserved or have been configured to provide a vehicle service.

In an understanding, the N service apparatuses may be service apparatuses that all need to be reserved. For example, the vehicle needs to perform energy supplement a plurality of times during long-distance traveling, and therefore service apparatuses at a plurality of locations need to be reserved. For another example, the vehicle needs to reserve a plurality of vehicle services, for example, parking and energy supplement. In another understanding, the N service apparatuses may be first N service apparatuses that have a highest degree of matching with the travel plan. In a reservation process, one of the N service apparatuses may be reserved.

In the foregoing first understanding, that the first apparatus makes a service reservation of N service apparatuses in the M service apparatuses may be implemented as follows: The first apparatus sends a reservation instruction to the N service apparatuses, and receives reservation responses of the N service apparatuses, where the reservation response may indicate whether the reservation succeeds; and when the reservation fails, the first apparatus may continue to send the reservation instruction to indicate that the reservation succeeds or queue for a reservation. In the foregoing second understanding, the first apparatus may sequentially send a reservation instruction to the N service apparatuses, for example, send the reservation instruction in descending order of matching degrees with the travel plan, and no longer send the reservation instruction to a subsequent service apparatus after the reservation succeeds. Alternatively, the first apparatus may send a reservation instruction to all the N service apparatuses, and determine, as the service apparatus that provides the vehicle service for the vehicle, the 1^{st} service apparatus whose reservation response indicates that the reservation succeeds.

In this embodiment of this application, the first apparatus determines the M service apparatuses based on the obtained travel information of the vehicle, and makes the service reservation of the N service apparatuses in the M service apparatuses. In this way, the user is prevented from manually selecting an appropriate service apparatus to make a reservation, and vehicle use convenience and vehicle use safety of the user are improved.

Further, the first apparatus determines the M service apparatuses based on the travel information, so that the M service apparatuses obtained through matching may provide a vehicle service for the vehicle, and a balance can be achieved between a travel path, the travel plan, and an energy consumption status that are of the vehicle. This avoids great impact on vehicle use of the user in some dimensions.

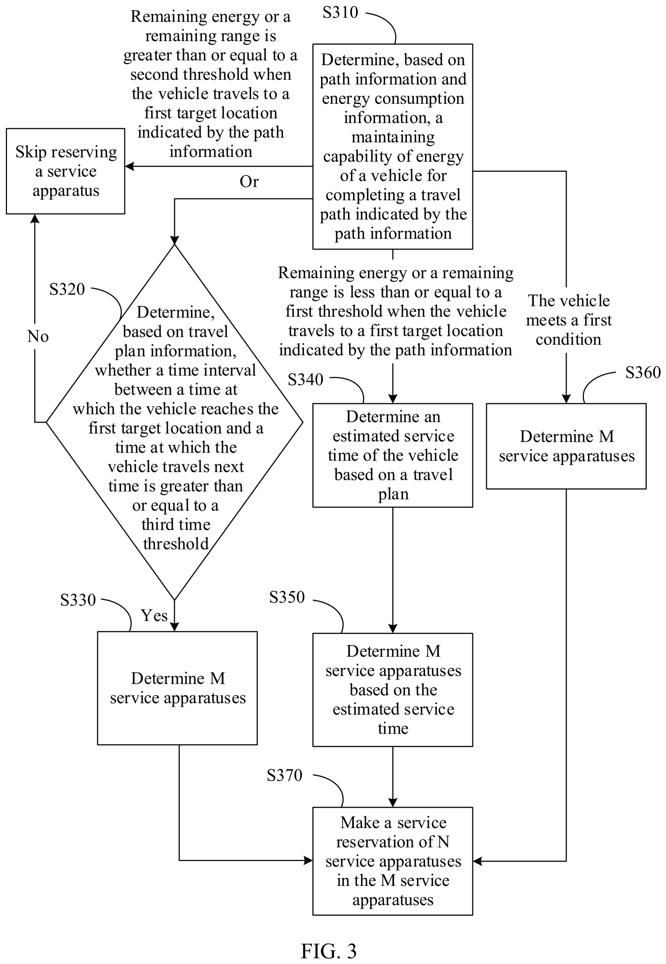

FIG. 3 is a schematic flowchart of a vehicle service reservation method according to an embodiment of this application. The method may include some or all of the steps shown in FIG. 3.

S310: A first apparatus determines, based on path information and energy consumption information, a maintaining capability of energy of a vehicle for completing a travel path indicated by the path information.

For example, the first apparatus determines, based on the path information and the energy consumption information, that remaining energy or a remaining range is greater than or equal to a second threshold when the vehicle travels to a first target location indicated by the path information. In this case, it indicates that the energy of the vehicle is sufficient to complete the travel path indicated by the path information, and the first apparatus may not reserve a service apparatus, or perform the following S320 and S330.

For example, the first apparatus determines, based on the path information and the energy consumption information, that remaining energy or a remaining range is less than or equal to a first threshold when the vehicle travels to the first target location indicated by the path information. In this case, it indicates that the energy of the vehicle may basically maintain completion of the travel path indicated by the path information, and the first apparatus may perform the following S340 and S350.

For example, the first apparatus determines, based on the path information and the energy consumption information, that the vehicle meets a first condition, where the first condition includes at least one of the following:
a range that remaining energy of the vehicle supports the vehicle to travel is less than a traveling range for reaching a first target location indicated by the path information;
a remaining range of the vehicle is less than the traveling range for reaching the first target location indicated by the path information; and
remaining energy or a remaining range is less than or equal to a first threshold when the vehicle travels to a first location, where the first location is a location that the vehicle reaches before traveling to the first target location indicated by the path information.

When the vehicle meets the first condition, it indicates that it is difficult for the energy of the vehicle to maintain completion of the travel path indicated by the path information, and the first apparatus may perform the following S360.

The first threshold and the second threshold may be the same or different. This is not limited in this application.

In this embodiment of this application, that a value relationship between the remaining energy or the remaining range and the threshold meets the foregoing condition means that a value relationship between one of the remaining energy or the remaining range and the threshold meets the foregoing condition. For example, that remaining energy or a remaining range is greater than or equal to a second threshold means that the remaining energy is greater than or equal to the second threshold, or the remaining range is greater than or equal to the second threshold.

That remaining energy or a remaining range is less than or equal to a first threshold may be understood as that the energy is exhausted. When the vehicle travels to a location (for example, the first target location or the first location), the remaining energy or the remaining range is less than or equal to the first threshold. In this case, it indicates that the location (for example, the first target location or the first location) is a location of an energy exhaustion point of the vehicle. If the remaining energy or the remaining range is greater than or equal to the second threshold when the vehicle travels to the first target location, it indicates that the vehicle does not have an energy exhaustion status on the travel path indicated by the path information.

In S310, the first apparatus may predict an energy status of the vehicle based on the path information and the energy consumption information, to determine whether the vehicle has an energy exhaustion status when completing the travel path indicated by the path information, and determine the location of the energy exhaustion point when the energy is exhausted.

It should be understood that a vehicle end may present the remaining energy (or remaining range) to a user through a display, and the presented remaining energy (or remaining range) is usually greater than actual remaining energy (or remaining range). To reserve safety energy for the vehicle, the remaining energy (or remaining range) in this embodiment of this application may be actual remaining energy (or remaining range), or may be remaining energy (or remaining range) in which safety energy is reserved for the vehicle.

S320: The first apparatus determines, based on travel plan information, whether a time interval between a time at which the vehicle reaches the first target location and a time at which the vehicle travels next time is greater than or equal to a third time threshold.

S330: The first apparatus determines M service apparatuses when the time interval between the time at which the vehicle reaches the first target location and the time at which the vehicle travels next time is greater than or equal to the third time threshold.

It should be noted that, in addition to a time plan for reaching the first target location, the travel plan information may further include a time plan for reaching another target location, that is, the vehicle further has a requirement for continuing to travel after traveling to the first target location. In an energy supplementation or parking scenario, if the time interval between the time at which the first target location is reached and the time at which next traveling starts is large, a vehicle service may be reserved, so that the vehicle supplements energy or stops in a traveling interval before the next traveling, to ensure that energy is sufficient in a next traveling process or a good vehicle status is obtained through parking. In a reverse energy supplement scenario, if the time interval between the time at which the vehicle reaches the first target location and the time at which the vehicle travels next time is large, and the energy of the vehicle is sufficient in this case, the vehicle can obtain an energy benefit through reverse energy supplement.

Certainly, if it is determined, based on a travel plan, that a time for the vehicle to reach the first target location is sufficient, when the energy of the vehicle is sufficient to maintain completion of the travel path indicated by the path information, the service apparatus may also be reserved to provide a vehicle service for the vehicle before the vehicle travels to the first target location.

In some embodiments, when the time interval between the time at which the vehicle reaches the first target location and the time at which the vehicle travels next time is greater than or equal to the third time threshold, the first apparatus may determine, based on the first target location, a location range of the vehicle service, and match the M service apparatuses within the location range of the vehicle service. The location range of the vehicle service may be understood as a location range near the first target location, so that the vehicle accepts, near the first target location, the vehicle service provided by the service apparatus. For example, the location range of the vehicle service may be a location range that uses the first target location as a center and that uses a preset value as a radius. However, this application does not limit the location range of the vehicle service to be presented as a circle in a plane, and the location range may be in any shape. In addition, the location range of the vehicle service may include or not include the first target location. This is not limited in this application.

S340: The first apparatus determines an allowed service time of the vehicle based on the travel plan.

S350: The first apparatus determines M service apparatuses based on the allowed service time.

It should be noted that the allowed service time may be a time difference between a time that is indicated by the travel plan information and at which the first target location is reached and an estimated time at which the vehicle travels to the first target location based on the path information. It may be understood that, if the time difference between the time that is indicated by the travel plan information and at which the first target location is reached and the estimated time at which the vehicle travels to the first target location based on the path information is large, the vehicle may supplement energy or stop based on the time difference, to provide a necessary vehicle service for the vehicle, and avoid impact on vehicle traveling due to lack of a vehicle service during next traveling.

For example, when the allowed service time is greater than or equal to a first time threshold, the first apparatus may obtain the M service apparatuses through matching within a second location range of the vehicle service. The second location range is a location range between a current location of the vehicle and the first target location. For example, the second location range may be a drivable area between the current location of the vehicle and the first target location, and the drivable area may be an area that meets the travel plan and/or that can be reached for the remaining range or remaining energy of the vehicle. The second location range may include a location range determined based on the first target location or a location range determined based on a third location, and the third location is a location that the vehicle reaches before traveling to the first target location based on the path information. In other words, when the allowed service time is sufficient, the first apparatus may reserve a service apparatus to provide a vehicle service in a traveling process of the vehicle or when the vehicle travels to the first target location.

Determining the location range based on the first target location or determining the second location range based on the third location is similar to determining a vehicle service range based on the first target location. For brevity, details are not described again. The service apparatus is matched within the location range determined based on the first target location, so that the vehicle may accept, near the first target location, the vehicle service provided by the service apparatus. The service apparatus is matched within the location range determined based on the third location, so that the vehicle may accept the vehicle service in a process of traveling to the first target location.

For example, when the allowed service time is less than or equal to a second time threshold, the first apparatus may obtain the M service apparatuses through matching within a third location range of the vehicle service. The third location range may be a location range determined based on the first target location. An implementation of determining the third location range based on the first target location is similar to that of determining the second location range based on the first target location. For brevity, details are not described again. In other words, when the allowed service time is insufficient, the first apparatus may reserve a service apparatus to provide a vehicle service when the vehicle travels to the first target location.

Certainly, when the energy of the vehicle can basically maintain completion of the travel path indicated by the path information, the first apparatus may alternatively determine, based on S320 and S330, the time interval between the time at which the vehicle reaches the first target location and the time at which next travelling starts, and when the time interval is large, the M service apparatuses are obtained through matching within the third location range.

S360: Determine the M service apparatuses.

In S360, the first apparatus may match the M service apparatuses within a first location range, where the first location range is a location range between the current location of the vehicle and the first location. The first location range is determined based on the first location or a second location, and the second location is a location that the vehicle reaches before traveling to the first location based on the path information.

Determining the first location range based on the first location or determining the first location range based on the second location is similar to determining a service range of the vehicle based on the first target location. For brevity, details are not described again. The service apparatus is matched within the first location range determined based on the first location, so that the vehicle can accept, near a first energy exhaustion point, a vehicle service provided by the service apparatus. When the first location range is determined based on the second location, the vehicle can accept a vehicle service before energy is exhausted. In conclusion, the first apparatus can reserve the service apparatus within the first location range to ensure that the vehicle service is provided before vehicle use is affected.

Based on S310 and S360, when it is difficult for the energy of the vehicle to maintain completion of the travel path indicated by the path information, a vehicle service may be reserved. Based on S310 to S330, or S310, S340, and S350, when the energy of the vehicle can maintain completion of the travel path indicated by the path information, whether to reserve the vehicle service may be determined with reference to the travel plan, to avoid impact on the travel plan of the user due to the vehicle service, and maintain a balance between energy consumption of the vehicle and the travel plan of the user.

In S330, S350, and S360, the M service apparatuses may be determined with reference to the following implementation: The first apparatus determines a time range and a service range of the vehicle service based on the travel information. The time range may be, for example, one or more time periods in which a vehicle service is allowed to be performed. The service range may include a service required by the vehicle. For example, the service range includes an energy supplement service, a parking service, and a reverse energy supplement service, and further includes an energy supplement amount and a reverse energy supplement. Further, the first apparatus matches the M service apparatuses within the time range and the service range.

In some embodiments, the first apparatus may determine the M service apparatuses based on the travel information and reservation assistance information. The reservation assistance information includes at least one of the following:
1. Account information of the vehicle, such as a vehicle owner account and a vehicle identifier.
2. Vehicle attribute information, such as a vehicle brand, a vehicle model, and a vehicle component parameter (for example, an engine parameter and a battery parameter).
3. User preference information, for example, a service apparatus (including a brand of the service apparatus, an identifier of the service apparatus, a vendor of the service apparatus, and the like) commonly selected by the user, a score of the service apparatus, the brand of the service apparatus, and the vendor of the service apparatus.

It should be noted that, for the vehicle brand in the reservation assistance information, when reserving the service apparatus, the first apparatus provides vehicle service solutions with different benefits for vehicles of different brands, or when matching the M service apparatuses, the first apparatus may provide vehicles of different brands, in other words, the M service apparatuses are matched for benefits of the vehicles of different bands. For example, a vehicle service reserved for the vehicle of the brand includes benefit services such as an unlimited reservation, a queue-free reservation, battery diagnosis, and vehicle maintenance.

Some or all of the vehicle brand, the vehicle model, a type of the vehicle service (for example, a charging service, a refueling service, or a parking service), and service energy (for example, a charging standard, a charging power of a charging pile, a size of a parking space, or a type of a parking space) of the service apparatus may be used as service reference information. The first apparatus may determine the M matched service apparatuses with reference to the service reference information, or determine sorting priorities of the M service apparatuses based on the service reference information.

In some implementations of the reverse energy supplement scenario, the first apparatus may determine, based on the path information and the energy consumption information, whether remaining energy or a remaining range is greater than or equal to a third threshold when the vehicle travels to the first target location, and determine the M service apparatuses if the remaining energy or remaining range is greater than or equal to the third threshold when the vehicle travels to the first target location. It is ensured that reverse energy supplement of the vehicle does not affect the vehicle in traveling to the first target location.

A value relationship between the third threshold and the second threshold is not limited in embodiments of this application.

Any threshold in this embodiment of this application, for example, the first threshold, the second threshold, the third threshold, the first time threshold, the second time threshold, or a quantity threshold, may be preset, for example, manually set, or may be adjustable, for example, may be adjusted by using an over-the-air technology (over-the-air technology, OTA) upgrade or the like.

In some implementations of the reverse energy supplement scenario, the first apparatus may determine the M service apparatuses or determine N service apparatuses from the M service apparatuses with reference to a benefit of reverse energy supplement (for example, an energy unit price corresponding to the service apparatus). For example, the N service apparatuses may be first N service apparatuses in the M service apparatuses that are sorted in descending order of service benefits. Further, the first apparatus makes a service reservation of the N service apparatuses.

S370: Make the service reservation of the N service apparatuses in the M service apparatuses. This step has a same or similar implementation as S230 in FIG. 2. Details are not described herein again.

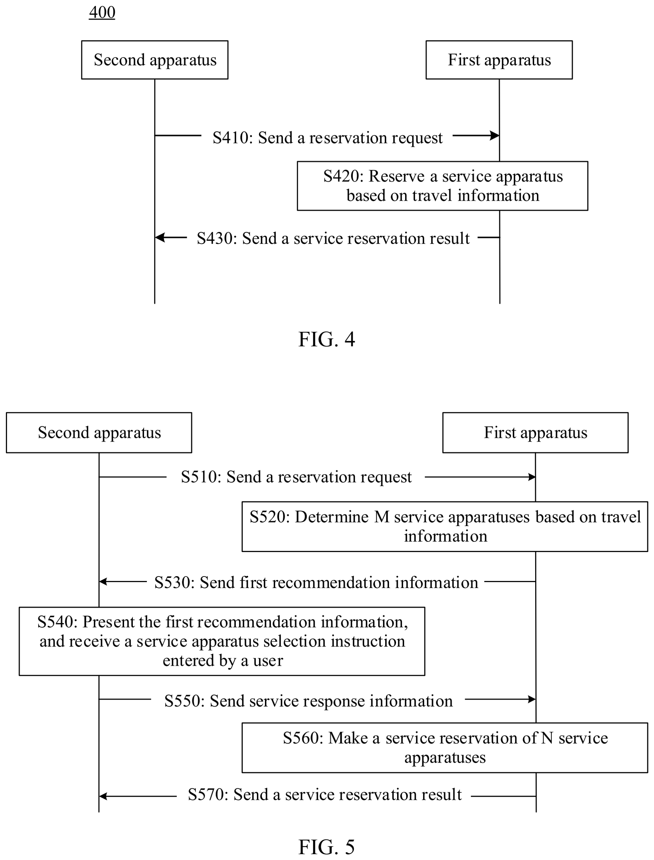

With reference to FIG. 4 to FIG. 7, the following describes embodiments of this application by using interaction between the first apparatus and the second apparatus as an example.

The vehicle service reservation method provided in FIG. 4 may include the following S410 to S430.

In S410, the second apparatus may send a reservation request to the first apparatus. Correspondingly, the first apparatus receives the reservation request sent by the second apparatus, where the reservation request is used to request the first apparatus to make a service reservation based on travel information. The reservation request may carry some or all of the travel information, or the reservation request may not carry the travel information. For example, for some or all of the travel information that is not carried in the reservation request, the information may be pre-stored in a cloud, and the first apparatus may read the information from the cloud in response to the reservation request.

For example, when the reservation request does not carry travel plan information, the first apparatus may read, from the cloud in response to the reservation request, travel plan information sent by a vehicle end in advance. The travel plan information may be calendar trip information of the vehicle end, or information such as a travel plan arrangement that is entered by the user and that is received by the vehicle end.

For another example, when the reservation request does not carry path information, the first apparatus may generate path information based on a first target location in response to the reservation request. The first target location may be carried in the reservation request, or the first target location may be determined based on travel plan information. The travel plan information may be carried in the reservation request or read from the cloud.

For another example, when the reservation request does not carry energy consumption information, in response to the reservation request, the first apparatus may determine energy consumption information (for example, remaining energy or a remaining range) of the vehicle based on a vehicle parameter (for example, an engine parameter or a battery parameter) of the vehicle. In a broad understanding of the energy consumption information, the vehicle parameter may be a part of the energy consumption information. In this case, it may be understood that the reservation request carries some information in the energy consumption information.

S420 in FIG. 4 is similar to S220 in the embodiment shown in FIG. 2. For brevity, details are not described again.

Refer to S430 in FIG. 4. The first apparatus sends a service reservation result to the second apparatus, where the service reservation result indicates reservation results of N service apparatuses, and a service apparatus that is successfully reserved in the N service apparatuses is configured to provide a vehicle service for the vehicle.

Optionally, after receiving the service reservation result, the second apparatus may present the service reservation result, so that a user checks whether the reservation succeeds.

In some embodiments, if the service reservation result indicates that at least one of the N service apparatuses is successfully reserved, the service reservation result may further indicate a location and/or an identifier of the service apparatus that is successfully reserved, so that the user learns of information about the service apparatus.

In some other embodiments, if the service reservation result indicates that at least one of the N service apparatuses fails to be reserved, the service reservation result may further indicate reservation waiting duration or reservation waiting person-times for the service apparatus that fails to be reserved.

In some embodiments, the second apparatus may further send reservation assistance information to the second apparatus, so that the second apparatus determines M service apparatuses with reference to the reservation assistance information and the travel information.

Based on the embodiment shown in FIG. 4, to help the user select the reserved service apparatus and further meet a vehicle service requirement of the user, a service reservation of the N service apparatuses selected by the user from the M matched service apparatuses may be made. For a specific implementation, refer to some or all processes of S510 to S570 in FIG. 5.

S510 is similar to S410 in FIG. 4, and S570 is similar to S430 in FIG. 4. For brevity, details are not described again. S520 to S560 may be understood as a possible implementation of S420 in FIG. 4, and S520 and S560 have been described in the embodiments shown in FIG. 2 and FIG. 3. For brevity, details are not described again.

In S530, the first apparatus sends first recommendation information to the second apparatus, where the first recommendation information indicates the M service apparatuses, that is, the first recommendation information is used to recommend the M service apparatuses that can provide vehicle services. The first recommendation information may include information such as an available reservation time and a geographical location of each of the M service apparatuses.

In S540, the second apparatus presents the first recommendation information, and receives a service apparatus selection instruction entered by the user, where the service apparatus selection instruction instructs to select N service apparatuses from the M service apparatuses. The first apparatus may present the first recommendation information by using media data such as a voice, a video, or an image, and the user may select N service apparatuses from the M service apparatuses based on the first recommendation information presented by the second apparatus. The user may enter the service apparatus selection instruction through an interaction operation. The interaction operation may be a voice operation, a touch operation, or the like.

In S550, after receiving the service apparatus selection instruction entered by the user, the second apparatus may send service response information to the first apparatus, where the service response information indicates the N service apparatuses selected by the user.

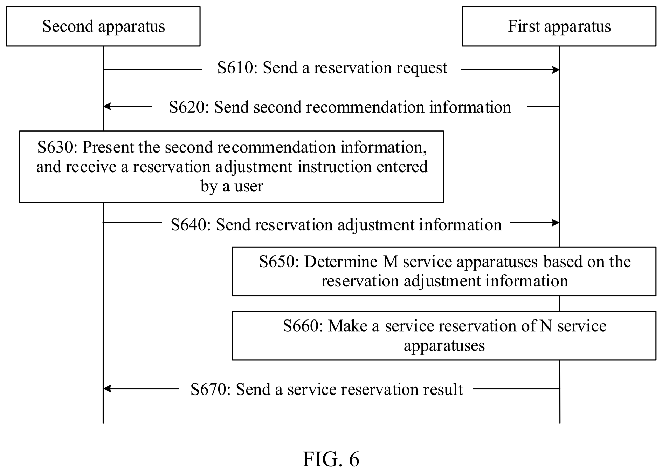

In the embodiment shown in FIG. 4, the first apparatus may fail to reserve the service apparatus. For example, the service apparatus fails to be matched, or all the M matched service apparatuses fail to be reserved. In this case, a service reservation range may be adjusted based on the embodiment shown in FIG. 6. However, the embodiment shown in FIG. 6 is not limited to adjusting the service reservation range when the service apparatus cannot be successfully reserved. For example, the service reservation range may also be adjusted when the quantity M of matched service apparatuses is small (for example, less than the quantity threshold). For a specific implementation, refer to some or all processes of S610 to S670 in FIG. 6.

S610 is similar to S410 in FIG. 4, and S670 is similar to S430 in FIG. 4. For brevity, details are not described again. S620 to S660 may be understood as a possible implementation of S420 in FIG. 4, and S660 has been described in the embodiments shown in FIG. 2 and FIG. 3. For brevity, details are not described again.

In S620, the first apparatus sends second recommendation information to the second apparatus, where the second recommendation information indicates modifiable reservation information, and the reservation information includes the travel information of the vehicle and/or reservation assistance information. For example, the second recommendation information may recommend the user to expand a brand range of an energy supplementation apparatus or switch path information to other information about an alternative path to the first target location.

In S630, the second apparatus may present the second recommendation information, and receive a reservation adjustment instruction entered by the user, where the reservation adjustment instruction instructs to modify the reservation information. For a presentation manner of the second recommendation information, refer to the presentation manner of the first recommendation information in S550. For an entering manner of the reservation adjustment instruction, refer to the entering manner of the service apparatus selection instruction in S550. For brevity, details are not described again.

In S640, the second apparatus sends reservation adjustment information to the first apparatus, where the reservation adjustment information is used to modify the reservation information, to adjust the service reservation range.

In S650, the first apparatus may determine M service apparatuses based on the reservation adjustment information. For example, the first apparatus may adjust the travel information based on the reservation adjustment information, and then determine the M service apparatuses based on adjusted travel information, or determine the M service apparatuses based on adjusted travel information and the reservation assistance information. Alternatively, the first apparatus adjusts the reservation assistance information based on the reservation adjustment information, and further determines the M service apparatuses based on the travel information and adjusted reservation assistance information.

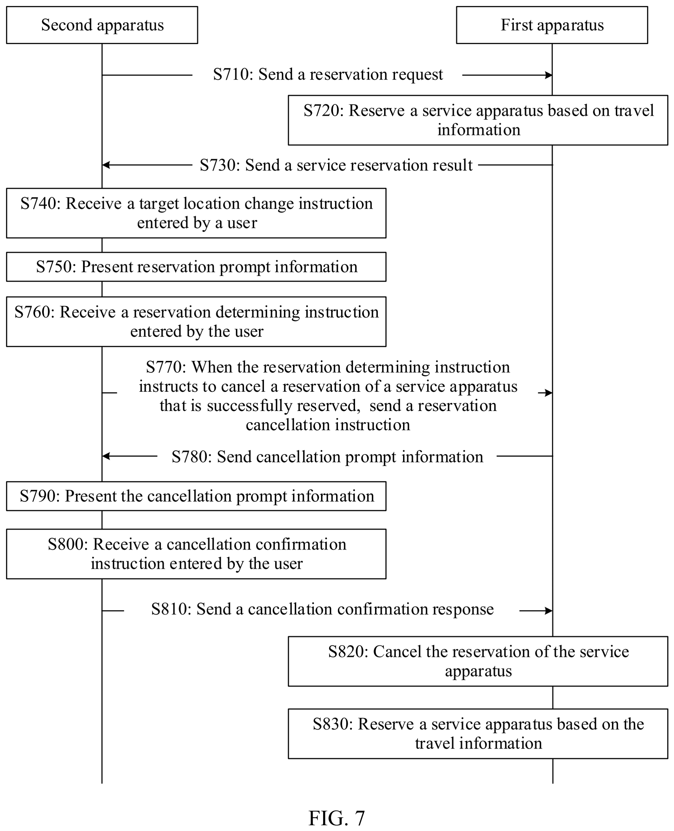

In some embodiments, when a target location of the vehicle is changed, for example, the first target location indicated by the path information is changed to a second target location, if a service apparatus has been reserved in this case, the reserved service apparatus may have a low matching degree due to the change of the target location. For example, after the target location is changed, the vehicle needs to detour to the location of the service apparatus in a process of traveling based on new path information. For another example, after the target location is changed, a time for the vehicle to reach the second target location is prolonged, and it is determined, based on the travel plan information, that there is no time for accepting a vehicle service. To resolve the foregoing problem that the service apparatus is not matched due to the change of the target location, an embodiment of this application provides a reservation change solution shown in FIG. 7.

Refer to FIG. 7. Implementation solutions of S710 to S730 are respectively the same as or similar to those of S410 to S430 in FIG. 4. For brevity, details are not described again.

In S740, the second apparatus receives a target location change instruction entered by the user. The target location change instruction instructs to change the first target location in the path information to a second target location. The target location change instruction entered by the user may be, for example, entered by the user on a navigation interface of the vehicle end through a destination modification operation, or may be entered by the user through voice interaction.

In S750, the second apparatus may present reservation prompt information, where the reservation prompt information indicates that a service apparatus is successfully reserved. Optionally, the reservation prompt information may further include information (for example, a location and/or an identifier) about the service apparatus that is successfully reserved. The second apparatus may present the reservation prompt information when a service apparatus is successfully reserved, and does not present the reservation prompt information when a service apparatus is not successfully reserved. In other words, the reservation prompt information presented by the second apparatus when a service apparatus is not successfully reserved does not include information about any service apparatus. The second apparatus may present the reservation prompt information to indicate the user that a service apparatus has been reserved, so as to avoid a case in which the user breaks an appointment due to ignoring that the service apparatus has been reserved. Further, when the reservation prompt information prompts information about the service apparatus that is successfully reserved, it is convenient for the user to determine whether to maintain a reservation status of the service apparatus that is successfully reserved.

In S760, the second apparatus may receive a reservation determining instruction entered by the user. The reservation determining instruction may indicate whether to continue to go to a location of the service apparatus that is successfully reserved. When the reservation determining instruction instructs to continue to go to the location of the service apparatus that is successfully reserved, a path on which the vehicle travels to the service apparatus may be set as a path in the path information, that is, on a path on which the vehicle travels to the second target location, the location of the service apparatus that is successfully reserved is set as a waypoint. When the reservation determining instruction instructs not to go to the location of the service apparatus that is successfully reserved, the reservation of the service apparatus that is successfully reserved may be canceled.

In S760, if the reservation determining instruction instructs to cancel the reservation of the service apparatus that is successfully reserved, the second apparatus may send a reservation cancellation instruction to the first apparatus, where the reservation cancellation instruction instructs to cancel the reservation of the service apparatus that is successfully reserved.

In response to the reservation cancellation instruction, the first apparatus may directly cancel the reservation of the service apparatus, for example, send a cancellation instruction to the service apparatus that is successfully reserved to cancel the reservation. Alternatively, in response to the reservation cancellation instruction, the first apparatus may perform a reservation cancellation process based on the following S780 to S810.

In S780, the first apparatus may send cancellation prompt information to the second apparatus, where the cancellation prompt information prompts a quantity of remaining reservation times.

In S790, the second apparatus may present the cancellation prompt information, to notify the user of the quantity of remaining reservation times, so as to avoid a case in which the user cannot make a vehicle service reservation due to lack of a reservation opportunity after blindly canceling the reservation.

In S800, the second apparatus may receive a cancellation confirmation instruction entered by the user.

In S810, the second apparatus may send a cancellation confirmation response to the first apparatus.

In S820, the first apparatus may cancel the reservation of the service apparatus in response to the cancellation confirmation response.

In S830, the first apparatus may reserve a service apparatus based on the travel information. It should be noted that the travel information is travel information obtained after the target location is updated, that is, a vehicle service is reserved again based on new target location. The reservation process is similar to S720. For brevity, details are not described again.

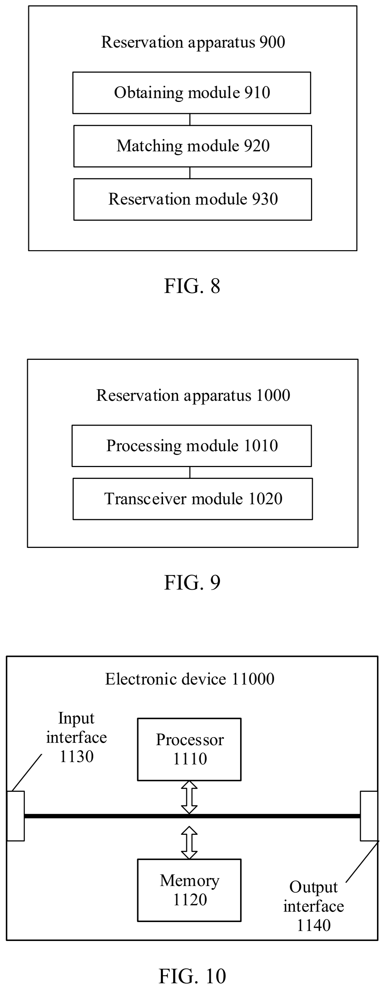

FIG. 8 is a block diagram of a reservation apparatus according to an embodiment of this application. As shown in FIG. 8, the apparatus 900 may be configured to implement the method on the first apparatus side in the method embodiments. The apparatus 900 may include an obtaining module 910, a matching module 920, and a reservation module 930.

The obtaining module 910 may be configured to obtain travel information of a vehicle, where the travel information includes path information, travel plan information, and energy consumption information. The matching module 920 may be configured to determine M service apparatuses based on the travel information, where M is a positive integer. The reservation module 930 may be configured to make a service reservation of N service apparatuses in the M service apparatuses, where N is a positive integer less than or equal to M, and a service apparatus that is successfully reserved in the N service apparatuses is configured to provide a vehicle service for the vehicle.

It should be understood that specific processes in which the modules perform the foregoing corresponding steps are described in detail in the foregoing method embodiments. For brevity, details are not described herein again.

Division into units/modules of the foregoing apparatus is merely logical function division. During actual implementation, all or some of the units/modules may be integrated into a physical entity, or may be physically separated.

FIG. 9 is a block diagram of a reservation apparatus according to an embodiment of this application. As shown in FIG. 9, the apparatus 1000 may be configured to implement the method on the second apparatus side in the method embodiments. The apparatus 1000 includes a processing module 1010 and a transceiver module 1020.

The processing module 1010 may be configured to determine a reservation request. The transceiver module 1020 may be configured to send a reservation request to a service end, where the reservation request is used to request the service end to make a service reservation based on travel information, and the travel information includes path information, travel plan information, and energy consumption information. The transceiver module 1020 may be further configured to receive a service reservation result sent by the service end, where the service reservation result indicates reservation results of N service apparatuses, the N service apparatuses are determined based on the travel information, and a service apparatus that is successfully reserved in the N service apparatuses is configured to provide a vehicle service for the vehicle.

It should be understood that specific processes in which the modules perform the foregoing corresponding steps are described in detail in the foregoing method embodiments. For brevity, details are not described herein again.

Division into units/modules of the foregoing apparatus is merely logical function division. During actual implementation, all or some of the units/modules may be integrated into a physical entity, or may be physically separated.

FIG. 10 is a block diagram of an electronic device 1100 according to an embodiment of this application. The electronic device 1100 may be implemented as a server or a terminal device, or the electronic device 1100 may be replaced with a component in the electronic device, for example, a chip or a chip system. The electronic device 1100 may include a processor 1110 and a memory 1120. The processor 1110 and the memory 1120 communicate with each other through an internal connection path. The memory 1120 is configured to store instructions. The processor 1110 is configured to execute the instructions stored in the memory 1120.

Optionally, the memory 1120 may include a read-only memory and a random access memory, and provide the instructions and data to the processor 1110. The memory 1120 may be a separate component, or may be integrated in the processor 1110.

In some embodiments, the electronic device 1100 may further include an input interface 1130. The processor 1110 may control the input interface 1130 to communicate with another device or chip, and specifically, may obtain information or data sent by the another device or chip.

In some embodiments, the electronic device 1100 may further include an output interface 1140. The processor 1110 may control the output interface 1140 to communicate with another device or chip, and specifically, may output information or data to the another device or chip.

In some embodiments, the electronic device 1100 may implement corresponding procedures of the methods in embodiments of this application. For brevity, details are not described herein again.

It should be understood that the processor in this embodiment of this application may be an integrated circuit chip, and has a signal processing capability. In an implementation process, steps in the foregoing method embodiments can be implemented by using a hardware integrated logical circuit in the processor, or by using instructions in a form of software. The processor may be a general purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware of the processor.

It may be understood that the memory in this embodiment of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

An embodiment of this application further provides a computer-readable storage medium, configured to store a computer program. In some embodiments, the computer program enables a computer to perform corresponding procedures in the methods in embodiments of this application. For brevity, details are not described herein again.

An embodiment of this application further provides a computer program product, including computer program instructions. In some embodiments, the computer program instructions enable a computer to perform corresponding procedures in the methods in embodiments of this application. For brevity, details are not described herein again.

An embodiment of this application further provides a computer program. In some embodiments, when the computer program is run on a computer, the computer is enabled to perform corresponding procedures in the methods in embodiments of this application. For brevity, details are not described herein again.

An embodiment of this application further provides a vehicle. In some embodiments, the vehicle includes the reservation apparatus in embodiments of this application or a control chip.

An embodiment of this application further provides a reservation system. In some embodiments, the reservation system includes a first apparatus and a second apparatus.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A vehicle service reservation method, comprising:
obtaining travel information of a vehicle, wherein the travel information comprises path information, travel plan information, and energy consumption information;
determining M service apparatuses based on the travel information, wherein M is a positive integer; and
making a service reservation of N service apparatuses in the M service apparatuses, wherein N is a positive integer less than or equal to M, and a service apparatus that is successfully reserved in the N service apparatuses is configured to provide a vehicle service for the vehicle.

2. The method according to claim 1, wherein determining the M service apparatuses based on the travel information comprises:
determining, based on the path information and the energy consumption information, whether the vehicle meets a first condition; and
when the vehicle meets the first condition, determining the M service apparatuses, wherein
the first condition comprises at least one of the following:
a range that remaining energy of the vehicle supports the vehicle to travel is less than a traveling range for reaching a first target location indicated by the path information;
a remaining range of the vehicle is less than the traveling range for reaching the first target location indicated by the path information; and
remaining energy or a remaining range is less than or equal to a first threshold when the vehicle travels to a first location, wherein the first location is a location that the vehicle reaches before traveling to the first target location.

3. The method according to claim 1 or 2, wherein determining the M service apparatuses comprises:
matching the M service apparatuses within a first location range, wherein the first location range is a location range between a current location of the vehicle and the first location, and the remaining energy or the remaining range is less than or equal to the first threshold when the vehicle travels to the first location.

4. The method according to claim 1, wherein determining the M service apparatuses based on the travel information comprises:
determining, based on the path information and the energy consumption information, that remaining energy or a remaining range is less than or equal to a first threshold when the vehicle travels to a first target location indicated by the path information;
determining an allowed service time of the vehicle based on the travel plan information; and
determining the M service apparatuses based on the allowed service time of the vehicle.

5. The method according to claim 4, wherein determining the M service apparatuses based on the allowed service time of the vehicle comprises at least one of the following:
when the allowed service time is greater than or equal to a first time threshold, obtaining the M service apparatuses through matching within a second location range of the vehicle service; or
when the allowed service time is less than or equal to a second time threshold, obtaining the M service apparatuses through matching within a third location range of the vehicle service, wherein
the second location range is a location range between a current location of the vehicle and the first target location, and the third location range is a location range determined based on the first target location.

6. The method according to claim 5, wherein both the first time threshold and the second time threshold are in a first proportional relationship with a travel time indicated by the travel plan information, and the travel time is a time required for the vehicle to reach the first target location indicated by the path information from the current location.

7. The method according to claim 1, wherein determining the M service apparatuses based on the travel information comprises:
determining, based on the path information and the energy consumption information, that remaining energy or a remaining range is greater than or equal to a second threshold when the vehicle travels to a first target location indicated by the path information;
determining, based on the travel plan information, whether a time interval between a time at which the vehicle reaches the first target location and a time at which the vehicle travels next time is greater than or equal to a third time threshold; and
when the time interval is greater than or equal to the third time threshold, determining the M service apparatuses.

8. The method according to claim 7, wherein determining the M service apparatuses comprises:
determining a location range of the vehicle service based on the first target location, and matching the M service apparatuses within the location range of the vehicle service.

9. The method according to any one of claims 1 to 8, wherein determining the M service apparatuses comprises:
determining the M service apparatuses based on the path information and service reference information.

10. The method according to any one of claims 1 to 9, wherein the vehicle service comprises an energy supplement service and/or a parking service.

11. The method according to claim 1, wherein the vehicle service comprises a reverse energy supplement service, and determining the M service apparatuses based on the travel information comprises:
determining, based on the path information and the energy consumption information, that remaining energy or a remaining range is greater than or equal to a third threshold when the vehicle travels to a first target location indicated by the path information; and
determining the M service apparatuses.

12. The method according to claim 11, wherein the N service apparatuses are first N service apparatuses in the M service apparatuses that are sorted in descending order of service benefits.

13. A reservation apparatus, comprising:
an obtaining module, configured to obtain travel information of a vehicle, wherein the travel information comprises path information, travel plan information, and energy consumption information;
a matching module, configured to determine M service apparatuses based on the travel information, wherein M is a positive integer; and
a reservation module, configured to make a service reservation of N service apparatuses in the M service apparatuses, wherein N is a positive integer less than or equal to M, and a service apparatus that is successfully reserved in the N service apparatuses is configured to provide a vehicle service for the vehicle.

14. The apparatus according to claim 13, wherein the matching module is specifically configured to:
determine, based on the path information and the energy consumption information, whether the vehicle meets a first condition; and
when the vehicle meets the first condition, determine the M service apparatuses, wherein
the first condition comprises at least one of the following:
a range that remaining energy of the vehicle supports the vehicle to travel is less than a traveling range for reaching a first target location indicated by the path information;
a remaining range of the vehicle is less than the traveling range for reaching the first target location indicated by the path information; and
remaining energy or a remaining range is less than or equal to a first threshold when the vehicle travels to a first location, wherein the first location is a location that the vehicle reaches before traveling to the first target location.

15. The apparatus according to claim 13 or 14, wherein the matching module is specifically configured to:
match the M service apparatuses within a first location range, wherein the first location range is a location range between a current location of the vehicle and the first location, and the remaining energy or the remaining range is less than or equal to the first threshold when the vehicle travels to the first location.

16. The apparatus according to claim 15, wherein the matching module is specifically configured to:
determine, based on the path information and the energy consumption information, that remaining energy or a remaining range is less than or equal to the first threshold when the vehicle travels to the first target location indicated by the path information;
determine an allowed service time of the vehicle based on the travel plan information; and
determine the M service apparatuses based on the allowed service time of the vehicle.

17. The apparatus according to claim 16, wherein the matching module is configured to:
when the allowed service time is greater than or equal to a first time threshold, obtain the M service apparatuses through matching within a second location range of the vehicle service; or
when the allowed service time is less than or equal to a second time threshold, obtain the M service apparatuses through matching within a third location range of the vehicle service, wherein
the second location range is a location range between the current location of the vehicle and the first target location, and the third location range is a location range determined based on the first target location.

18. The apparatus according to claim 17, wherein both the first time threshold and the second time threshold are in a first proportional relationship with a travel time indicated by the travel plan information, and the travel time is a time required for the vehicle to reach the first target location indicated by the path information from the current location.

19. The apparatus according to claim 13, wherein the matching module is specifically configured to:
determine, based on the path information and the energy consumption information, that remaining energy or a remaining range is greater than or equal to a second threshold when the vehicle travels to a first target location indicated by the path information;
determine, based on the travel plan information, whether a time interval between a time at which the vehicle reaches the first target location and a time at which the vehicle travels next time is greater than or equal to a third time threshold; and
when the time interval is greater than or equal to the third time threshold, determine the M service apparatuses.

20. A reservation system, comprising a first apparatus and a second apparatus, wherein the first apparatus is a service reservation demander, and the second apparatus is a service reservation responder, wherein
the second apparatus sends a reservation request to the first apparatus, wherein the reservation request is used to request the first apparatus to make a service reservation based on travel information, and the travel information comprises path information, travel plan information, and energy consumption information;
the first apparatus determines M service apparatuses based on the travel information, wherein M is a positive integer; and
the first apparatus makes a service reservation of N service apparatuses in the M service apparatuses, wherein N is a positive integer less than or equal to M, and a service apparatus that is successfully reserved in the N service apparatuses is configured to provide a vehicle service for the vehicle.

21. The system according to claim 20, wherein the first apparatus is configured to:
determine, based on the path information and the energy consumption information, whether the vehicle meets a first condition; and
when the vehicle meets the first condition, determine the M service apparatuses, wherein
the first condition comprises at least one of the following:
a range that remaining energy of the vehicle supports the vehicle to travel is less than a traveling range for reaching a first target location indicated by the path information;
a remaining range of the vehicle is less than the traveling range for reaching the first target location indicated by the path information; and
remaining energy or a remaining range is less than or equal to a first threshold when the vehicle travels to a first location, wherein the first location is a location that the vehicle reaches before traveling to the first target location.

22. The system according to claim 21, wherein the first apparatus is configured to:
match the M service apparatuses within a first location range, wherein the first location range is a location range between a current location of the vehicle and the first location, and the remaining energy or the remaining range is less than or equal to the first threshold when the vehicle travels to the first location.

23. The system according to claim 20, wherein the first apparatus is configured to:
determine, based on the path information and the energy consumption information, that remaining energy or a remaining range is less than or equal to a first threshold when the vehicle travels to a first target location indicated by the path information;
determine an allowed service time of the vehicle based on the travel plan information; and
determine the M service apparatuses based on the allowed service time of the vehicle.

24. The system according to claim 23, wherein the first apparatus is configured to:
when the allowed service time is greater than or equal to a first time threshold, obtain the M service apparatuses through matching within a second location range of the vehicle service; or
when the allowed service time is less than or equal to a second time threshold, obtain the M service apparatuses through matching within a third location range of the vehicle service, wherein
the second location range is a location range between a current location of the vehicle and the first target location, and the third location range is a location range determined based on the first target location.

25. The system according to claim 24, wherein both the first time threshold and the second time threshold are in a first proportional relationship with a travel time indicated by the travel plan information, and the travel time is a time required for the vehicle to reach the first target location indicated by the path information from the current location.

26. The system according to claim 20, wherein the first apparatus is configured to:
determine, based on the path information and the energy consumption information, that remaining energy or a remaining range is greater than or equal to a second threshold when the vehicle travels to a first target location indicated by the path information;
determine, based on the travel plan information, whether a time interval between a time at which the vehicle reaches the first target location and a time at which the vehicle travels next time is greater than or equal to a third time threshold; and
when the time interval is greater than or equal to the third time threshold, determine the M service apparatuses.

27. The system according to claim 26, wherein the first apparatus is configured to:
determine a location range of the vehicle service based on the first target location, and match the M service apparatuses within the location range of the vehicle service.

28. The system according to any one of claims 20 to 27, wherein the first apparatus is configured to:
determine the M service apparatuses based on the path information and vehicle brand information.

29. The system according to any one of claims 20 to 28, wherein the vehicle service comprises an energy supplement service and/or a parking service.

30. The system according to claim 20, wherein the vehicle service comprises a reverse energy supplement service, and the first apparatus is specifically configured to:
determine, based on the path information and the energy consumption information, that remaining energy or a remaining range is greater than or equal to a third threshold when the vehicle travels to a first target location indicated by the path information; and
determine the M service apparatuses.

31. The system according to claim 30, wherein the N service apparatuses are first N service apparatuses in the M service apparatuses that are sorted in descending order of service benefits.

32. The system according to any one of claims 20 to 31, wherein the reservation request carries at least one of the path information, the travel plan information, and the energy consumption information.

33. The system according to any one of claims 20 to 32, wherein
the first apparatus sends first recommendation information to the second apparatus, wherein the first recommendation information indicates the M service apparatuses;
the second apparatus presents the first recommendation information;
the second apparatus receives a service apparatus selection instruction entered by a user, wherein the service apparatus selection instruction instructs to select the N service apparatuses from the M service apparatuses; and
the second apparatus sends service response information to the first apparatus, wherein the service response information indicates the N service apparatuses.

34. The system according to any one of claims 20 to 33, wherein
the first apparatus sends second recommendation information to the second apparatus, wherein the second recommendation information indicates modifiable reservation information, and the reservation information comprises the travel information of the vehicle and/or reservation assistance information;
the second apparatus presents the second recommendation information;
the second apparatus receives a reservation adjustment instruction entered by the user, wherein the reservation adjustment instruction instructs to modify the reservation information; and
the second apparatus sends reservation adjustment information to the first apparatus.

35. The system according to any one of claims 20 to 34, wherein
the second apparatus receives a target location change instruction entered by the user, wherein the target location change instruction instructs to change the first target location in the path information to a second target location;
the second apparatus presents reservation prompt information when a service apparatus is successfully reserved, wherein the reservation prompt information indicates that the service apparatus is successfully reserved;
the second apparatus receives a reservation determining instruction entered by the user, wherein the reservation determining instruction instructs to set a path on which the vehicle travels to the service apparatus that is successfully reserved as a path in the path information, or instructs to cancel a reservation of the service apparatus that is successfully reserved; and
the second apparatus sends a reservation cancellation instruction to the first apparatus when the reservation determining instruction instructs to cancel the reservation of the service apparatus that is successfully reserved.

36. The system according to any one of claims 20 to 35, wherein
the first apparatus sends a service reservation result to the second apparatus, wherein the service reservation result indicates reservation results of the N service apparatuses.

37. A chip, comprising a processor, configured to invoke computer instructions from a memory and run the computer instructions, to enable a device in which the chip is installed to perform the method according to any one of claims 1 to 12.

38. An electronic device, comprising a processor and a memory, wherein the memory is configured to store a computer program, and the processor is configured to invoke and run the computer program stored in the memory, to perform the method according to any one of claims 1 to 12.

39. A computer-readable storage medium, configured to store computer program instructions, wherein the computer program enables a computer to perform the method according to any one of claims 1 to 12.

40. A computer program product, comprising computer program instructions, wherein the computer program instructions enable a computer to perform the method according to any one of claims 1 to 12.
